# EUROPEAN PATENT SPECIFICATION

(11) **EP 1 605 638 B1**
(45) Date of publication and mention of the grant of the patent: **14.03.2007**
(21) Application number: 05251702.6
(22) Date of filing: 21.03.2005
(51) Int. Cl.: H04L 12/28

(54) **Cipher key setting system and method for a wireless access point**
System zur Verarbeitung von kryptographischen Schlüsseln für einen drahtlosen Access point
Système et méthode d'établissement du chiffrement dans un point d'accès sans fil

(30) Priority: 21.04.2004 JP 2004125150
(43) Date of publication of application: 14.12.2005
(73) Proprietor: Buffalo Inc., Nagoya-shi, Aichi 457-8520 (JP)
(72) Inventor: Tamura, Yoshiteru, c/o Buffalo Inc., Nagoya-shi, Aichi 457-8520 (JP)
(74) Representative: Sturt, Clifford Mark

(56) References cited:
- EP-A- 1 035 684
- US-A- 5 341 427
- US-A1- 2003 219 129
- US-A1- 2004 030 895

## Description

### Technical Field to which the Invention Belongs

The present invention relates to a cipher key setting system, an access point, and a cipher key setting method.

### Description of the Related Art

### Related Background Art

To build up a communication network with an access point being a repeater for a wireless LAN needs to attain a high security level of the network, which prevents fraudulent intrusion into the network and the leakage of communication data to a third party and so forth. Accordingly, various security techniques on the wireless LAN have been disclosed thus far.

For example, a technique is proposed which utilizes MAC (Media Access Control) addresses being inherent identification numbers assigned in advance to wireless LAN interfacing devices (for example, wireless LAN adapters) mounted on terminals. This technique registers the MAC addresses to an access point, makes the access point authenticate the MAC addresses accompanied with the accesses from the terminals, and rejects a request from a terminal requiring the access point to connect the terminal to the network, if the terminal address is a MAC address other than the registeredMAC addresses (refer to Patent Document 1). Another technique is proposed which sets a WEP (Wired Equivalent Privacy) key to the terminals and the access point as a common cipher key. This technique enciphers the contents of data exchanged between the terminals and the access point by using the WEP key, which makes the analysis of data contents difficult so that the data contents cannot be understood even if the data are leaked (refer to Patent Document 2).

The applicant has already made a patent application relating to the invention for performing to register a MAC address and to set a cipher key represented by the WEP key securely without difficulty (JPA No. 408011/2003). According to the application, the invention dispenses with troublesome input operations on registering the MAC addresses to an access point and setting cipher keys to terminals. Thereby, a user can perform a necessary security setting easily, while preventing leakage of data indicating the cipher key, even in case a new terminal using the wireless LAN is added to the network.
[Patent Document 1] JPA No. 320373/2001
[Patent Document 1] JPA No. 345819/2001

However, the invention described in the application leaves technical problems as follows. That is, when a new terminal is added to the network, the cipher system and the cipher key are set which are used based on a specified security policy in the network, the set cipher system and cipher key are maintained until another terminal is added to the network on a next occasion. And when the terminals participating in the network become decreased, the settings of the cipher system and cipher key are maintained. In consequence, after a terminal withdraws from the network, there remains a problem that the security environments cannot necessarily be optimized between wireless LAN devices participating in the network.

US 5341427 discloses an apparatus for secure communications containing a controller for automatically selecting one of several data ciphering devices utilizing one of a plurality of ciphering algorithms common to transmitting and receiving terminals. A transmitter for transmitting encrypted data, and a receiver for receiving encrypted data are coupled to the plurality of ciphering devices. The controller automatically determines which of the ciphering devices to employ for any given secure communication. The method for establishing a secure communications link includes the steps of exchanging a first message for determining a common key generation and ciphering method and comparing a further shared message for validation of communications terminal security. Additionally, the steps of trading a still further message for providing data to form traffic keys to initialize key generators, interchanging an additional message for synchronizing and verifying synchronization of secure communications between secure communications terminals, and initiating secure communication are used.

### Disclosure of the Invention

The present invention has been made in view of the above problem, and provides a cipher key setting system, an access point, and a cipher key setting method, which flexibly adapt to variations of the devices building up the wireless LAN and set optimum security environments to the wireless LAN devices at the moment of the variations.

In order to accomplish the foregoing object, according to a first aspect of the invention, there is provided a cipher key setting system adapted to set a cipher system and a cipher key used for enciphering prior to communication of wireless communication data exchanged by wireless between a wireless LAN access point and a terminal with a wireless LAN interfacing device, wherein:
the terminal comprises:
   a cipher system transmitting means on the terminal side adapted to transmit to the access point by wireless cipher systems that the terminal can adapt itself to, and
   a cipher system selecting means on the terminal side adapted to detect a cipher system adopted by the access point and to select the detected cipher system, characterized in that
   the access point comprises:
      a connected terminal detecting means adapted to specify terminals participating in a wireless LAN and to detect whether there are any variations in the terminals participating therein, and
      a cipher system selecting means on the access point side adapted to select, when the connected terminal detecting means detects that there have been variations in the terminals participating in the wireless LAN, a specified cipher system according to a predetermined criterion among the cipher systems that the access point can adapt itself to and the terminals participating in the wireless LAN can commonly adapt themselves to.

In the first aspect of the invention constructed as the above, the cipher key setting system sets the cipher system and the cipher key used for enciphering prior to communication wireless communication data exchanged by wireless between the wireless LAN access point and the terminal with the wireless LAN interfacing device.

Here, the terminal transmits the cipher systems that the terminal can adapt itself to through the cipher system transmitting means to the access point by wireless. The access point, recognizing the cipher systems that the terminals can adapt themselves to, specifies the terminals participating in the wireless LAN and detects whether there are any variations in the terminals participating therein, by using the connected terminal detecting means. And, when it is detected that there have been variations in the terminals participating in the wireless LAN, the cipher system selecting means on the access point side adopts to select a specified cipher system according to a predetermined criterion among the cipher systems that the access point can adapt itself to and the terminals participating in the wireless LAN can commonly adapt themselves to.

On the other hand, the terminal detects a cipher system adopted by the access point and selects the detected cipher system by using the cipher system selecting means on the terminal side. Thereafter, the terminals participating in the wireless LAN and the access point perform wireless communications, using the cipher key used in the adopted cipher system.

Thus according to the invention, the setting of the cipher system to be adopted is reviewed, each time the connected terminal detecting means detects variations in the construction of the devices building up the wireless LAN. Therefore, if there occur variations in the devices participating in the wireless LAN, the system according to the invention is able to automatically select an optimum cipher system among the cipher systems that can be adopted by the devices participating in the wireless LAN, thereby invariably optimizing the security environments invariably.

According to a second aspect of the invention, when the connected terminal detecting means detects that there have been variations in the terminals participating in the wireless LAN, and when the terminals participating in the wireless LAN can commonly adapt themselves to a cipher system of a higher security level compared to the cipher system being adopted thus far, the cipher system selecting means on the access point side selects the cipher system of the higher security level.

In the second aspect of the invention constructed as the above, when the connected terminal detecting means detects that there have been variations in the terminals participating in the wireless LAN, the cipher system selecting means on the access point side, when the terminals participating in the wireless LAN can commonly adapt themselves to a cipher system of a higher security level compared to the cipher system being adopted thus far, selects the cipher system of the higher security level. In other words, each time the access point detects that there occur variations in the constructions of the devices intending to continue the communications by the wireless LAN, the access point reviews whether the devices intending to continue the communications can adopt a cipher system of a higher security level compared to the cipher system being adopted thus far. Performing such review will make it possible to invariably select the cipher system of the highest security level among the cipher systems that the access point can adapt itself to and the terminals participating in the wireless LAN can commonly adapt themselves to.

According to a third aspect of the invention, the connected terminal detecting means specifies the terminals participating in the wireless LAN repeatedly at each predetermined time on the basis of identification information inherent in the terminals each, compares the specified identification information inherent in the terminals each with the identification information inherent in the terminals each that were acquired by a previous specifying operation of the terminals, and thereby detects that the number of the terminals participating in the wireless LAN decreases.

That is, as a concrete construction that detects the variations in the terminals participating in the wireless LAN, repeatedly at each predetermined time is made to detect whether the number of the terminals participating in the wireless LAN decreases or not, repeatedly at each predetermined time. The connected terminal detecting means specifies the terminals participating in the wireless LAN periodically on the basis of the identification information inherent in the terminals each, and compares the specified identification information inherent in the terminals each with the identification information inherent in the terminals each that were acquired by a previous specifying operation of the terminals, thereby detecting a decrease in the number of the terminals. Therefore, each time specifying the terminals participating in the wireless LAN, the access point needs to store list data relating to the specified terminals at least until the access point specifies the terminals participating in the wireless LAN.

Thus, monitoring the variations in the number of the terminals participating in the wireless LAN repeatedly at each predetermined time will make it possible to reliably review the setting of the cipher systems each time the number of the devices participating in the wireless LAN decreases.

According to a fourth aspect of the invention, the construction may be made such that the connected terminal detecting means specifies the terminals participating in the wireless LAN repeatedly at each predetermined time on the basis of identification information inherent in the terminals each, compares the specified identification information inherent in the terminals each with the identification information inherent in the terminals each that were acquired by a previous specifying operation of the terminals, and thereby detects that there are replacements in the terminals participating in the wireless LAN.

There is a margin for reviewing the cipher systems that the devices participating in the wireless LAN can adopt, even when some of the terminals participating in the wireless LAN are replaced. Therefore, performing such review will give a chance of adopting the cipher system of a higher security level compared to the cipher system having been adopted before the terminals are replaced.

According to a fifth aspect of the invention, the access point includes a cipher key transmitting means on the access point side that transmits to a terminal by wireless cipher systems narrowed by the cipher systems transmitted by the cipher system transmitting means on the terminal side and cipher keys used in each of the narrowed cipher systems, of the cipher systems that the access point can adapt itself to. The terminal is made up with a cipher key storing means on the terminal side that stores each of the cipher keys corresponding to each of the cipher systems transmitted from the access point in a predetermined storage area.

In the fifth aspect of the invention constructed as the above, the cipher key transmitting means on the access point side transmits to a terminal by wireless the cipher systems narrowed by the cipher systems transmitted by the cipher system transmitting means on the terminal side and the cipher keys used in each of the narrowed cipher systems, of the cipher systems that the access point can adapt itself to. And, the cipher key storing means on the terminal side stores each of the cipher keys corresponding to each of the cipher systems transmitted from the access point in a predetermined storage area. In consequence, the terminals are able to acquire the cipher systems that the terminals and the access point can commonly adopt and the cipher keys used in the cipher systems. And, the cipher systems narrowed by the cipher systems and the cipher keys used in each of the narrowed cipher systems are transmitted from the access point to the terminal side. Thereby, it will be unnecessary to notify the cipher keys anew, even if the access point switches the cipher system afterwards. This will relieve troublesomeness of performing notifications, and will prevent lowering of security accompanied with notifying the cipher keys at the same time.

According to a sixth aspect, the construction may be made such that the cipher key transmitting means on the access point side transmits the narrowed cipher systems and the cipher keys used in each of the narrowed cipher systems to the terminal, only once when the cipher systems are transmitted by the cipher system transmitting means of the terminal concerned on the terminal side. That is, to transmit the narrowed cipher systems and the cipher keys from the access to the terminal only once will make it unnecessary to notify the cipher keys anew, even if the access point switches the cipher system afterwards. This will relieve troublesomeness of performing notifications to a great extent, and will prevent lowering of the security accompanied with notifying the cipher keys at the same time significantly.

When receiving notifications of some of the cipher systems and the cipher keys corresponding thereto, the terminal side will need to specify the cipher systems.

As a preferred example in this case, according to a seventh aspect of the invention, the construction is made such that, when switching an adopted cipher system accompanied with the variations in the terminals participating in the wireless LAN, the cipher system selecting means on the access point side changes a station ID in correspondence with the switching of the adopted cipher system.

In the seventh aspect of the invention constructed as the above, when the cipher system selecting means on the access point side switches an adopted cipher system, accompanied with the variations in the terminals participating in the wireless LAN, the cipher system selecting means switches a station ID in correspondence with the switching thereof. The terminal side can easily detect that the cipher system has been switched, by detecting the switched station ID; accordingly, the terminal side can easily follow the selection of the cipher system on the access point side.

As a more detailed example, according to an eighth aspect of the invention, the cipher key transmitting means on the access point side specifies different station IDs to each of the cipher systems that the access point can adapt itself to, and transmits to the terminals by wireless the specified station IDs together with the cipher keys in correspondence with each of the narrowed cipher systems. The cipher system selecting means on the terminal side acquires the station IDs from connectable access points, and when the acquired station IDs have a station ID coincident with the station IDs stored in advance by the cipher key storing means on the terminal side, adopts the cipher system and the cipher key corresponding to the station ID.

In the eighth aspect of the invention constructed as the above, the cipher key transmitting means on the access point side specifies different station IDs to each of a plurality of the cipher systems that the access point can adapt itself to, and transmits to the terminals by wireless the specified station IDs together with the cipher keys in correspondence with each of the narrowed cipher systems. And, the cipher key transmitting means on the access point side will adopt the station IDs corresponding to the cipher systems that are adopted at that moment by the devices making up the wireless LAN.

On the other hand, the cipher system selecting means on the terminal side acquires the station IDs from connectable access points, and judges whether the acquired station IDs have a coincident station ID with the station IDs that are transmitted in advance from the access point and stored. If there is a coincidence, it will permit a judgment that the access point adopts the cipher system corresponding to the station ID and the cipher key; and the terminal will adopt the same cipher system and the cipher key accordingly. Thus, it will be unnecessary to perform notifications for specifying the cipher systems between the access point and the terminal; thereby the above construction will relieve troublesomeness of the procedure and prevent lowering of the security.

It is also unnecessary to perform notifications for specifying the cipher systems between the access point and the terminal in case that there have been some variations in the adopted cipher systems, which is the same as the above.

According to a ninth aspect of the invention, when it becomes impossible to maintain the wireless communication with the access point based on the specified station ID, the cipher system selecting means on the terminal side newly acquires the station IDs from the connectable access points, and when the newly acquired station IDs have a station ID coincident with the station IDs stored in advance, adopts the cipher system and the cipher key corresponding to the station ID.

In the ninth aspect of the invention constructed as the above, when it becomes impossible to maintain the wireless communication with the access point based on the specified station ID, the cipher system selecting means on the terminal side newly acquires the station IDs from the connectable access points. And when the newly acquired station IDs have a station ID coincident with the station IDs stored in advance, the terminal adopts the cipher system and the cipher key corresponding to the station ID. In other words, when there have been variations in the adopted cipher systems due to a decrease of the number of the terminals participating in the wireless LAN or due to replacements of the terminals, the access point does not need to notify the newly adopted cipher systems and so forth to the terminals that intend to maintain the wireless communications. It is possible to automatically follow up the variations in the cipher systems on the terminal side, which will relieve troublesomeness of the maintenance and prevent lowering of the security.

The aforementioned cipher key setting system can be understood not only as the whole system made up with the access point and the terminals, but also as the invention of the access point being one of the components.

According to a tenth aspect of the invention, there is provided a wireless LAN access point arranged to adapt itself to a plurality of cipher systems in the wireless LAN communication, and adapted to set a cipher system and a cipher key used in enciphering communication data prior to performing wireless communications with a terminal provided with a wireless LAN interfacing device, characterized by
a connected terminal detecting means adapted to specify terminals participating in a wireless LAN and to detect whether there are any variations in the terminals participating therein, and
a cipher system selecting means on the access point side adapted to select, when the connected terminal detecting means detects that there have been variations in the terminals participating in the wireless LAN, a specified cipher system according to a predetermined criterion on the basis of data relating to the cipher systems transmitted in advance by wireless from a plurality of terminals, among the cipher systems that the access point can adapt itself to and the terminals participating in the wireless LAN can commonly adapt themselves to.

Naturally, the terminals being the components of the cipher key setting system can be understood as the invention.

Further, the invention can be understood as the wireless communication system from the aspect of the devices, and it can also be understood as an execution procedure of the system.

According to an eleventh aspect of the invention, there is provided a cipher key setting method that sets a cipher system and a cipher key used for enciphering prior to communication of wireless communication data exchanged by wireless between a wireless LAN access point and a terminal with a wireless LAN interfacing device wherein:
the terminal transmits to the access point by wireless cipher systems that the terminal can adapt itself to, characterized in that
the access point specifies terminals participating in a wireless LAN through the access point and detects whether there are any variations in the terminals participating therein, and when detecting that there have been variations in the terminals participating in the wireless LAN, adopts to select a specified cipher system according to a predetermined criterion among the cipher systems that the access point can adapt itself to and the terminals participating in the wireless LAN can commonly adapt themselves to, and
the terminal detects the cipher system adopted by the access point and selects the detected cipher system.

Naturally, the invention based on the tenth and eleventh aspects can also be understood by applying the same embodiment as the invention based on the first through the ninth aspects has applied.

### Industrial Applicability

As mentioned above, according to the invention, it is possible to review the setting of the cipher systems each time that there are variations in the devices participating in the wireless LAN, and to automatically select an optimum cipher system, for example, a cipher system of the highest security level among the cipher systems that the devices participating in the wireless LAN can adopt. Thus, the invention will invariably provide optimum security environments to the devices participating in the wireless LAN.

### Brief Description of the Drawings

Fig. 1 illustrates a construction of hardware that implements a cipher key setting system relating to one embodiment of the invention.
Fig. 2 illustrates a construction of an access point.
Fig. 3 is a flowchart illustrating the one-touch registering procedure in the cipher key setting system.
Fig. 4 is a flowchart illustrating the processing of the packet exchange and the determining procedure of the cipher system.
Fig. 5 is a flowchart illustrating the processing procedure of a connection-monitoring mode.
Fig. 6 is a flowchart illustrating the processing of adding a terminal.
Fig. 7 is a flowchart illustrating the determining procedure of the cipher system accompanied with a decreased terminal.
Fig. 8 is a flowchart illustrating the determining procedure of the cipher system accompanied with replaced terminals.
Fig. 9 is a flowchart illustrating the procedure of switching the cipher system.

### Description of Special Embodiment

The preferred embodiments of the invention will be described in the following order.
1. Schematic construction for implementing the cipher key setting system
2. Concrete contents of the cipher key setting system
   2-1. case of increasing the terminal number
   2-2 case of decreasing the terminal number
3. Modified examples
4. Conclusion

### 1. Schematic construction for implementing the cipher key setting system

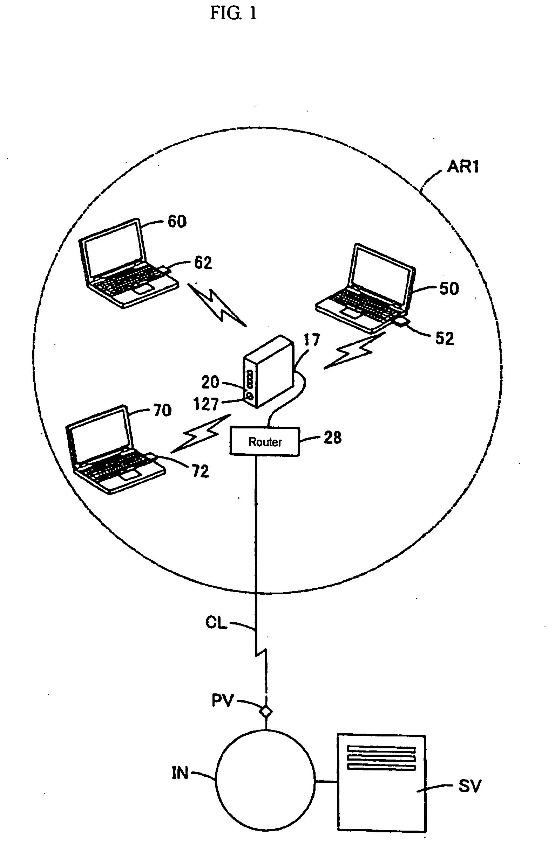

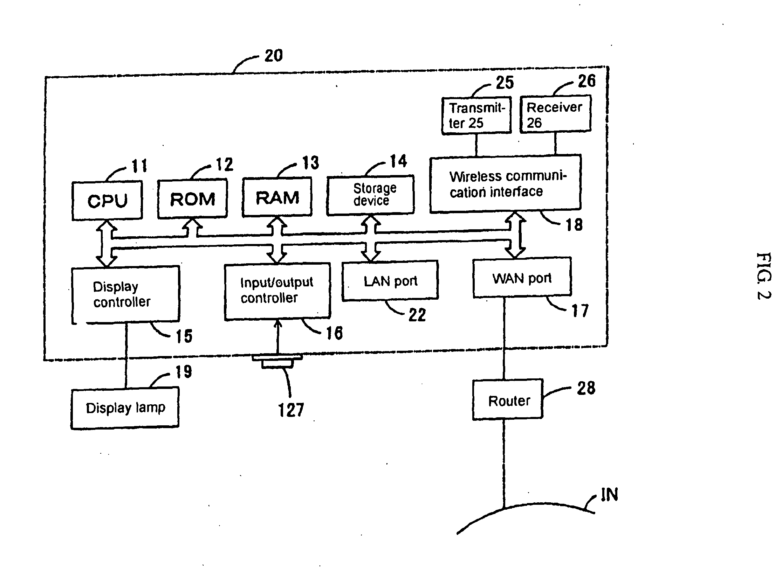

Fig. 1 illustrates a construction of hardware that implements the cipher key setting system relating to the invention. Fig. 2 illustrates a construction of an access point 20.

The cipher key setting system performs a wireless communication between a specified terminal and the access point 20 in a wireless LAN communication area AR1, in which the cipher key data representing the contents of the cipher key are superposed on a radio wave; and thereby, the system sets the cipher key used in the wireless communication between the specified terminal and the access point 20.

As shown in Fig. 1, in the wireless communication area AR1 is installed the access point 20 (wireless base station) being a repeater for the wireless LAN. The access point 20 includes, as shown in Fig. 2, a CPU 11, a ROM 12 mutually connected with the CPU 11 through a bus, a RAM 13, a nonvolatile storage device 14 such as a hard disk, a WAN port 17 as the network interface, a LAN port 22 for connecting with a wired LAN, a wireless communication interface 18, a display controller 15, and an input/output controller 16 and so forth.

The ROM 12 contains various programs relating to the communications with the terminals 50, 60, and 70 in the wireless communication area AR1, various programs relating to the connections with the Internet IN, and various data necessary for executing these programs. The input/output controller 16 has a push-type register button 127 connected. The register button 127 is mounted on the access point 20 in a manner that the pressed part thereof is exposed on the enclosure surface of the access point 20. To the display controller 15 are connected various display lamps 19 that display the connection state and the communication state with the wireless LAN by means of lighting and/or flashing, or the other means.

To the wireless communication interface 18 are connected a transmitter 25 for transmitting a radio wave and a receiver 26 for receiving radio waves. The access point 20 incorporates the transmitter 25 and the receiver 26 in a state that the transmitter 25 can transmit the radio wave and the receiver can receive the radio waves from the outside. The wireless communication area AR1 illustrated in Fig. 1 represents the range in which, when the output of the transmitter 25 and the reception sensitivity of the receiver 26 are set to the standard setting values, the radio wave transmitted from the transmitter 25 can reach and the receiver 26 can receive the radio waves from the terminals 50, 60, and 70. By installing the access point 20 with this construction, a wireless LAN will be structured so as to have the wireless communication area AR1 as the normal communication range.

The ROM 12 stores in advance an output-modifying program that describes a temporarily modifying processing of the output standard setting value for the transmitter 25, and a reception-sensitivity-modifying program that describes a temporarily modifying processing of the reception sensitivity standard setting value for the receiver 26, as the programs for communicating with the terminals 50, 60, and 70. The processing for modifying the setting values are performed by arithmetic processing that multiply the standard setting values by 1/n (n: a predetermined constant). The CPU 11 executes the output-modifying program and the reception-sensitivity-modifying program, and outputs a modified output value and a modified reception sensitivity value through the wireless communication interface 18 to the transmitter 25 and the receiver 26. Thereby, the transmitter 25 transmits the radio wave at the modified output level, and the receiver 26 receives the radio wave with the modified reception sensitivity.

The terminals 50, 60, and 70 are the well-known note-type personal computer, which includes the control device composed of a CPU, ROM, RAM, etc., and a hard disk drive and a CD-ROM drive as the storage device. Naturally, they may be the mobile information terminal (Personal Digital Assistant) or the other terminal.

The terminals 50, 60, and 70 have wireless LAN adapters 52, 62, and 72 mounted thereon as the wireless LAN interfacing device, which enables the transmissions and receptions of the radio waves between the access point 20 and these terminals. To incorporate the device driver for the wireless LAN adapters 52, 62, and 72 into the terminal 50 will enable the terminals 50, 60, and 70 to recognize and control the mounted wireless LAN adapters 52, 62, and 72. Here, the wireless LAN adapters 52, 62, and 72 have MAC addresses assigned thereto, which are identification numbers inherent in the adapters. Here, in the following description, the expression 'MAC addresses of the terminals' represents 'MAC addresses of the wireless LAN adapters.

The wireless LAN adapters 52, 62, and 72 perform the transmissions and receptions of radio waves with the access point 20 in the wireless communication area AR1, and thereby the terminals 50, 60, and 70 communicate by wireless with the access point 20. The access point 20 and the wireless LAN adapters 52, 62, and 72 are capable of converting the format of exchange data into the format suitable for communication, the so-called packet format. Thereby, the off-line data exchange (in a state that the system LH1 is not connected to the Internet) becomes possible in theory between the terminals 50, 60, and 70 and the access point 20.

Next, the access point 20 is connected to the Internet IN, and the construction for this connection will be described. As shown in Fig. 1, a router 28 incorporating a modem is connected through a cable to the WAN port 17 of the access point 20. The router 28 is capable of specifying and discriminating the terminals 50, 60, and 70 in the wireless LAN, on the basis of the MAC addresses of the wireless LAN adapters 52, 62, and 72 each. The modem contained in the router 28 is connected to the Internet In through a broadband communication line CL such as a CATV line and xDSL line, and a provider dedicated line PV. That is, the router 28 functions as a gateway connecting the wireless LAN to the Internet IN.

This embodiment gives permission for the connection to the wireless LAN to the terminals of which MAC addresses are registered to the access point 20 (hereunder, called registered terminal), among the multiple terminals including the wireless LAN adapters residing in the wireless communication area AR1. The owners of the registered terminal are able to connect the own terminals to the Internet IN through the access point 20, and to acquire various types of information such as the web contents stored in the server SV on the Internet IN. On the other hand, the terminals of which MAC addresses are not registered to the access point 20 (hereunder, called non-registered terminal) cannot be connected to the wireless LAN even if they reside in the wireless communication area AR1. That is, the wireless communication area AR1 is the free spot where the connection service to the Internet IN is provided only to the owners of the registered terminal. Here in Fig. 1, the terminals 50 and 60 are assumed as the registered terminal, and the terminal 70 is assumed as the non-registered terminal.

The data including various contents such as contracts and services (hereunder, called content-bearing data) which are superposed on the radio waves are transmitted and received between these registered terminals and the access point 20. This embodiment assumes that the device (registered terminals, access point 20) for transmitting the content-bearing data enciphers the content-bearing data in advance of transmission with a specified cipher key, and transmits enciphered content-bearing data (hereunder, called enciphered data) to the receiving device (access point 20, registered terminals). The receiving device deciphers the received enciphered data with the specified cipher key, and acquires the content-bearing data.

Here, the cipher key can take a WEP key. The WEP key is based on the cryptographic technique of a secret key cryptography (both the enciphering side of data and the deciphering side of enciphered data use the same cipher key) standardized in the IEEE 802.11. This cryptographic technique includes the system (WEP 64) using the 64-bits WEP key and the system (WEP 128) using the 128-bits WEP key. The cryptographic technique using the WEP key makes the analysis of the content-bearing data difficult, when the radio waves with the content-bearing data superposed are intercepted in the wireless communication area AR1, which prevents the communication contents from leaking to a third party. In addition to the cryptography using the WEP key, other cryptographic techniques called TKIP (Temporal Key Integrity Protocol) and AES (Advanced Encryption Standard) are available. The security level heightens according to the order of WEP 64, WEP 128, TKIP, and AES, as listed here.

### 2. Concrete contents of the cipher key setting system

The method of setting the cipher key to the terminals 50 and 60, and the method of resetting the cipher key when the terminal 60 of the terminals 50 and 60 withdraws from the wireless LAN will be described.

### 2-1. case of increasing the terminal number

Here, the general wireless LAN device does not necessarily adapt itself to all the cipher systems. This embodiment premises that the access point 20 can adopt the WEP 64, WEP 128, TKIP, and AES, the wireless LAN adapter 52 adapts itself to the WEP 64, WEP 128, and TKIP, and the wireless LAN adapter 62 adapts itself to the WEP 64 and WEP 128. The following relates a case of registering the MAC address of the terminal 50 to the access point 20 first, setting the cipher key to the terminal 50 to build up a wireless LAN, and then adding the terminal 60 to the wireless LAN.

The ROM 12 of the access point 20 stores in advance a program (MAC register program) for registering the MAC addresses of the wireless LAN adapters 52 and 62 and a cipher system selection program as well, as the program for the communications with the terminals 50 and 60. On the other hand, a utility program installed in the terminals 50 and 60 on using the wireless LAN contains a program (cipher key setting program) for setting the cipher system and cipher key.

In the same manner as the register button 127 of the access point 20, the wireless LAN adapters 52 and 62 are provided with the register button implemented by a hardware switch not illustrated. The software is made capable of discriminating the pressed-down condition of these buttons through the interface.

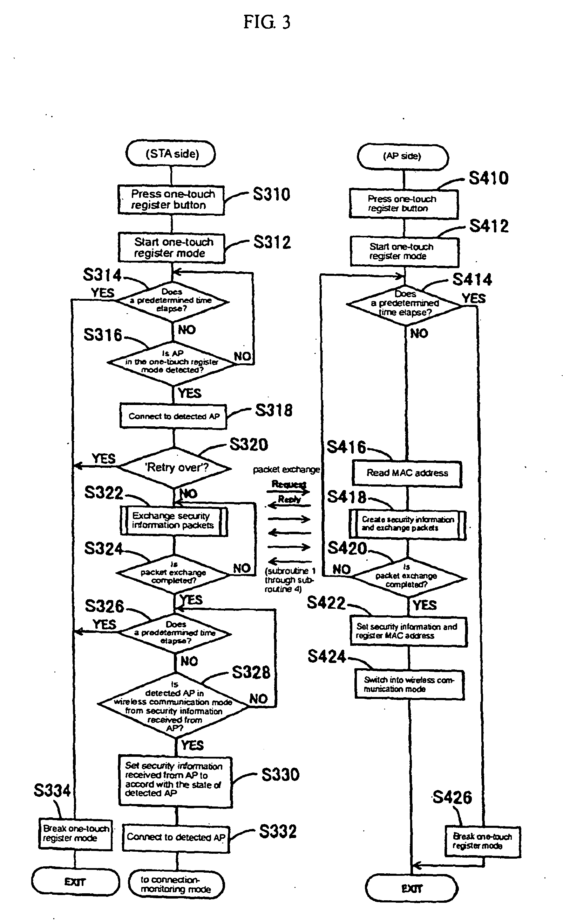

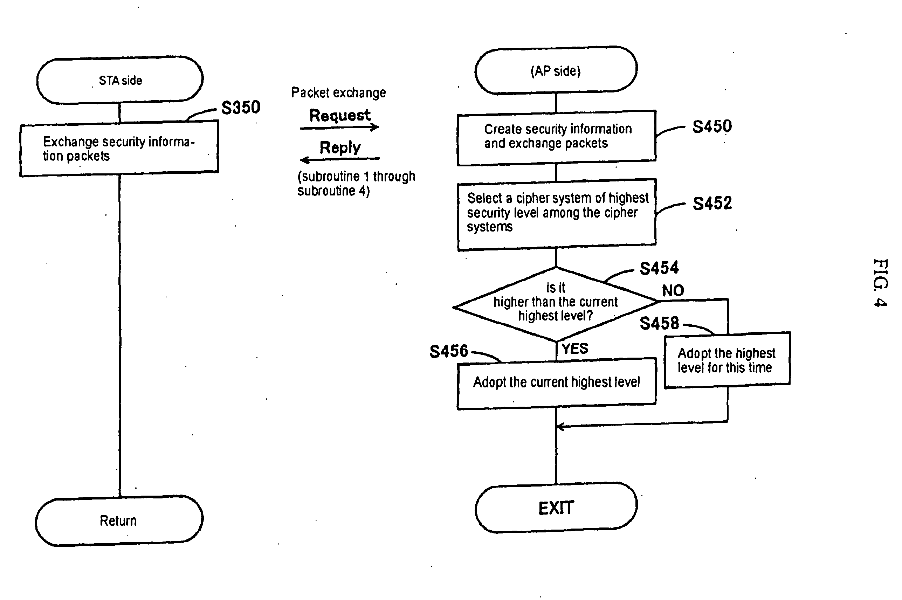

Fig. 3 and Fig. 4 illustrate the flowcharts corresponding to the MAC register program, the cipher system selection program, and the cipher key setting program that the access point 20 and the terminals 50, 60 execute. The access point 20 executes the MAC register processing in parallel to the cipher system selection processing. In the following flowcharts, STA indication is given to the side of the terminals 50 and 60, and AP indication is given to the side of the access point 20.

The access point 20 and the terminals 50 and 60 are turned into a one-touch register mode by pressing-down the register buttons, and they start the respective processing. That is, on the side of the terminal 50, when detecting the pressed-down state of the register button at step S310 as shown in Fig. 3, the terminal 50 starts to execute the processing of step S312 thereafter. On the side of the access point 20, when detecting the pressed-down state of the register button 127 at step S410, the access point 20 starts the one-touch register mode of step 412 thereafter.

The terminal 50, being turned into the one-touch register mode, searches the access point 20 being in the one-touch register mode at step S316. Concretely, the access point 20, being turned into the one-touch register mode, switches the station ID (ESSID) into a specified station ID determined in advance, and transmits a beacon. The terminal 50 tries connecting to the access point with the specified ESSID. The terminal 50 searches connectable access points, acquires the status of the connectable access points, and judges whether the mode is the one-touch register mode or not on the basis of the status.

The processing time for searching the access point 20 being in the one-touch register mode is limited to a predetermined period of time by the processing at step S314. When the predetermined time elapses without finding out the access point 20, the processing moves to step S334, and terminates the one-touch register mode.

If it searches the access point 20 being in the one-touch register mode within the predetermined time, the terminal 50 tries connecting to the detected access point 20 at step S318. Concretely, the terminal 50 specifies the MAC address of the wireless LAN adapter 52, and transmits to the access point 20 the packet having the MAC address added to the data indicating the instruction that the terminal 50 participates in the wireless LAN as the header information. The processing at step S320 is to prevent unnecessary increase in the frequency of such connection trials; and if the frequency exceeds a predetermined one, the processing judges it as 'retry over'. Then, the processing moves to step S334, and terminates the one-touch register mode.

As the terminal 50 succeeds in the connection without the 'retry over', the terminal 50 exchanges security information packets with the access point 20 at step S322.

On the other hand, the access point 20 reads the MAC address from the header information of the received packet at step S416, and temporarily stores the read MAC address in a buffer area of the RAM 13. The access point 20 also executes the packet exchange processing while creating the security information at step 418, in correspondence with the above processing by the terminal 50. This exchange processing of the security information packet is shown in step S350 and step 450 and thereafter, in Fig. 4.

The concrete contents of the packet exchange processing are as follows.

### Subroutine 1:

The terminal 50 sends a request for creating the security information to the access point 20.

### Subroutine 2:

The access point 20 sends a reply that indicates receiving the request to the terminal 50. Here, the access point 20 determines the values of the ESSID and cipher key to each of the cipher systems that the access point 20 adapts itself to, when receiving the request for creating the security information for the first time. As an example, the access point 20 sets 'ESSID1' and 'DATA1' to the cipher system WEP 64, sets 'ESSID2' and 'DATA2' to the cipher system WEP 128, sets 'ESSID3' and 'DATA3' to the cipher system TKIP, and sets 'ESSID4' and 'DATA4' to the cipher systemAES. The 'ESSID1' through 'ESSID4' are the station IDs that are determined at random on the basis of the random number or the like, and the 'DATA1' through DATA4' are the values determined at random in correspondence with the cipher systems each.

### Subroutine 3:

The terminal 50 sends to the access point 20 the data indicating the cipher systems that the terminal 50 adapts itself to. In this case, the wireless LAN adapter 52 mounted on the terminal 50 adapts itself to the WEP 64, WEP 128, and TKIP, and the terminal 50 sends the data indicating these three cipher systems.

### Subroutine 4:

The access point 20 is capable of detecting the cipher systems that the terminal 50 can adapt itself to on the basis of the received data. Accordingly, the access point 20 narrows its own adaptable cipher systems from the detected cipher systems. In concrete, the cipher systems of the terminal 50 are narrowed down to the WEP 64, WEP 128, and TKIP. And, the access point 20 sends to the terminal 50 the data indicating the values of the ESSID and the cipher key already determined to each of the cipher systems. Concretely, the access point 20 sends 'ESSID1' and 'DATA1' associated with the cipher system WEP 64, 'ESSID2' and 'DATA2' associated with the cipher system WEP 128, and 'ESSID3' and 'DATA3' associated with the cipher system TKIP.

Thus, receiving from the access point 20 the data indicating the values of the ESSID and cipher key corresponding to the cipher systems that both the access point 20 and the terminal 50 can adapt themselves to, the terminal 50 stores the data in a specified storage area.

The above is the packet exchange processing of security information at step S350 and at step S450 between the terminal 50 and the access point 20. The packet exchange processing as such is necessary to be performed only once between one terminal and the access point 20, and once is sufficient. That is, the exchange processing of the data indicating the cipher system and the cipher key themselves becomes unnecessary between the access point and the terminal concerned. The terminal is able to specify the cipher system that the terminal should adopt on the basis of the beacon transmitted by the access point 20, which will be described later. Here, the data communications as to the packet exchange processing are performed after the MAC address of the opposite party is specified and enciphered. In concrete, the terminal 50 creates the seed (Init ID) for enciphering, and sends it together with the above request. Thereafter, both the access point 20 and the terminal 50 perform the enciphering and deciphering using the VAN function based on this Init ID for the data communications.

After the packet exchange processing of security information, at step S452, the access point 20 selects the cipher system of the highest security level among the cipher systems noticed from the terminal 50. Among the noticed cipher systems WEP 64, WEP 128, and TKIP, the TKIP is of the highest security level, and the access point 20 selects this as a tentative candidate. At step S454, the access point 20 compares the candidate selected at step S452 and the cipher system of the currently highest level. Here, the currently highest level means the highest security level of the cipher systems narrowed down from among the cipher systems that the access point 20 adapts itself to, by the cipher systems that the terminals can adapt themselves to.

When performing the packet exchange processing of security information with the terminal 50 for the first time, the cipher system noticed from the terminal 50 is of the highest security level, and the cipher systems of both coincide. However, as the terminals are added thereafter, since the cipher systems are narrowed based on the cipher systems that the terminals registered in the past can adapt themselves to, the cipher systems of both are not necessarily coincident.

If the judgment at step S454 is YES (higher than the currently highest level), the access point 20 maintains the currently highest level; and if it is NO (lower than or equal to the currently higher level), the access point 20 adopts the cipher system selected at step S452, being the highest level for this time. Therefore, the packet exchange with the terminal 50 results in the above judgment of both being 'equal' , and the access point 20 adopts the cipher system 'being the highest level for this time' at step 458, which is the TKIP.

The above branch processing shows the user security policy. Here, the security polity represents the guideline that, when contrasting the cipher systems that the access point can adapt itself to and the cipher systems that the terminal can adapt itself to, specifies which one of the cipher systems should be adopted.

The above branch processing shows, when the highest security level that a newly added terminal can adapt itself to is not higher than the security level up to that moment, the security policy 'to make the same terminal participate in the network even by lowering the security level' (hereunder, called policy 1) . Here, if the level is judged as equal, the processing when it is judged as 'not higher' is performed. However in consequence, it is the same as the processing at step S454, 'adopting the currently highest level'.

In contrast, it is possible to define a lowest security level in advance and determine the security policy not to take a security level lower than the predefined one (hereunder, called policy 2). In this case, the subroutine is needed to add the judgment 'is it higher than or equal to the lowest security level?' after step S452, to advance to step S452 and thereafter if the judgment is YES, and to advance to step S456 if it is NO.

In order to prepare the security policy that heightens the security level to the highest level for a new terminal in consideration for a special application (hereunder, called policy 3), the subroutine is needed to execute the processing 'adopt the highest level for this time' at step 456, in replacement for the processing 'adopt the currently highest level' . Thus on occasion for registering a new terminal, the subroutine prepares the branch processing so as to reflect the selection of security policies by a user in advance; thereby, it becomes possible not only to relieve the troublesome setting of individual cipher keys, but also to continuously reflect the security policy that the user selects.

To implement this selection, the setting program of the access point 20 displays the policies 1 through 3 on the screen, makes the user select one by using the mouse or the like, and writes the selected result in a register or the like. The access point 20 reads the contents of the register in a practical processing, and performs the branch processing that reflects the written contents. Naturally, an arrangement may be made which provides the access point 20 with hardware switches such as DIP-switches, and selects the security policy through the switching operation thereof.

The above processing including the subroutines completes the packet exchange processing of security information on the side of the access point 20.

Returning to Fig. 3, the access point 20 judges whether the packet exchange is completed at step S420, and sets the determined security information at step S422, excluding the case that the predetermined period of time is judged to have elapsed at step S414 before completing the packet exchange.

In other words, while adopting the cipher system determined at steps S456 and S458, the access point 20 will adopt the values of the station ID and the cipher key corresponding to the same cipher system to the ciphering and deciphering processing thereafter. The above step 422 also registers the MAC address of the terminal 50. That is, the access point 20 reads out the MAC address of the terminal 50 from the ROM 13, and registers it in a management area of the storage device 14.

Having adopted the TKIP in the packet exchange processing with the terminal 50, the access point 20 will adopt the 'ESSID3' to the station ID, and the 'DATA3' to the cipher key of the TKIP.

Thereafter, the access point 20 completes the one-touch register mode at step S424, and switches the mode into the normal wireless communication mode. When the predetermined period of time elapsed during the packet exchange processing, the access point 20 also terminates the one-touch register mode at step S426; however, since the registering is not completed, the mode will not be switched into the wireless communication mode.

Thus, the access point 20 will not notify the determined cipher system to the terminal 50 and so forth.

The terminal 50 on the other side searches the access point 20 being in the wireless communication mode among the security information received from the access point 20 at step S328. The security information received from the access point 20 are 'ESSID1' and 'DATA1' associated with the cipher system WEP 64, 'ESSID2' and 'DATA2' associated with the cipher system WEP 128, and 'ESSID3' and 'DATA3' associated with the cipher system TKIP.

The terminal 50 acquires the station ID of an accessible access point first. The procedure for acquiring the station ID is executed on the basis of the communication standard IEEE802.11. By receiving the beacon from the access point, the terminal 50 can acquire the station ID of the currently accessible access point. Since the access point 20 adopts the TKIP as the cipher system, the station ID thereof is 'ESSID3'. Accordingly, the terminal 50 acquires the station ID 'ESSID3' based on the beacon from the access point 20, and contrasts the station ID with the security information that are already received and stored in the predetermined storage area. That the station ID is 'ESSID3' consequently specifies that the cipher system is the TKIP. And, to use 'DATA3' as the cipher key will realize the enciphering and deciphering.

The terminal 50 sets the security information received from the access point to accord with the state of the detected access point, at step S330. That is, the terminal 50 will use the cipher system and cipher key corresponding to the detected station ID in the enciphering and deciphering from thereafter.

Thus, the registering of the MAC address of the wireless LAN adapter 52 to the access point 20 is completed, and the settings of the common cipher key to the access point 20 and the terminal 50 are also completed. And, at step 332, the terminal 50 connects itself to the detected access point 20, and thereafter starts the connection-monitoring mode described later.

If the terminal 50 cannot detect the access point 20 within the predetermined time at step S328, the processing advances to step S334 without specifying the cipher system by way of the judgment at step S326, and breaks the one-touch register mode.

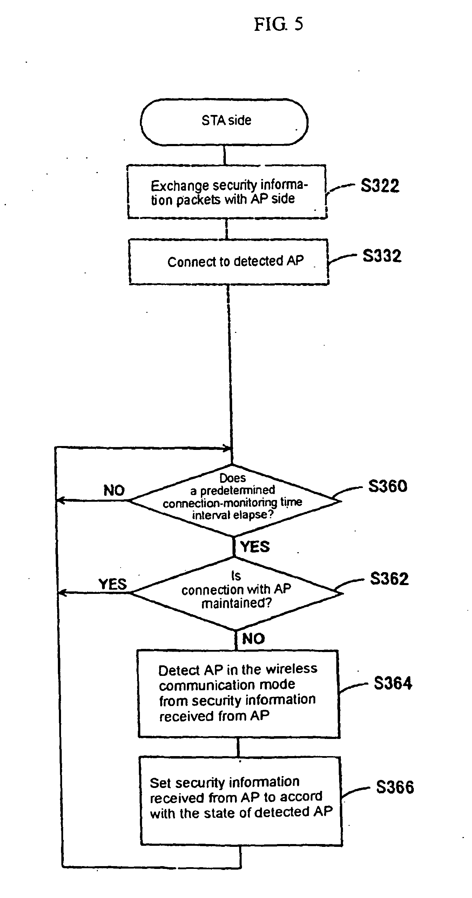

Fig. 5 shows the connection-monitoring mode on the terminal side. Here, the parts marked by the dotted lines in the drawing show only the processing related deeply with the connection-monitoring mode, on the premise that there exists the other processing.

The connection-monitoring mode is executed at step S360 through step 366, in the state that the packet exchange processing is executed at step S322 and the connection with the access point detected at step S322 is maintained. In concrete, step S360 judges whether a predetermined connection-monitoring time interval elapses or not. If yes, step S362 judges whether the connection with the access point 20 is maintained or not. In other words, whether the connection with the access point 20 is maintained or not is judged every constant time intervals. If it is maintained, the processing returns to step S360 again, and the same processing is repeated during the connection every constant time intervals.

If the connection with the access point 20 is not maintained on the other hand, the terminal 50 acquires the station ID of the accessible access point from the beacon of the receivable access point at step S364, and contrasts the above station ID with the station ID of the security information already received from the access point 20. And, if there is a coincidence in the contrast, the terminal 50 can detect that the access point 20 is in the wireless communication mode while switching the station ID to switch the cipher system. The terminal sets the already received security information to accord with the state of the detected access point 20 at step S366. Thus, the terminal 50 adopts the cipher system and cipher key associated with the switched station ID.

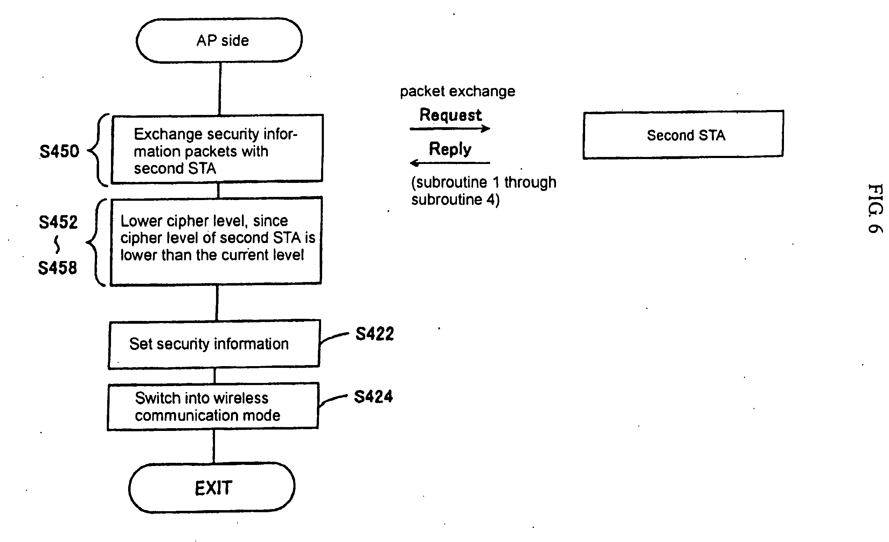

Next, the state of such variations occurring in the cipher system will be explained on the basis of the processing appearing on the side of the access point 20 during registering the terminal 60. Fig. 6 specially shows the steps where the processing contents are varied in correspondence with the terminal 60 among the processing by the access point illustrated in Fig. 3.

On registering the terminal 60, the terminal 60 and the access point 20 each perform the packet exchange processing at steps S350 and S450. Here, in case the terminal 60 participates in the wireless LAN, the access point 20 also performs the above MAC register program, the contents of which are the same as the case with the terminal 50, and the description will be omitted.

Since the cipher systems that the wireless LAN adapter 62 of the terminal 60 adapts itself to are the WEP 64 and WEP 128 only, the packet exchange processing will be as follows.

### Subroutine 1:

The terminal 60 sends a request for creating the security information to the access point 20.

### Subroutine 2:

The access point 20 sends a reply that indicates receiving the request to the terminal 60. Here, the access point 20 has already determined the station ID and the cipher key of each of the aforementioned cipher systems when receiving the request from the terminal 50.

### Subroutine 3:

The terminal 60 sends to the access point 20 the data indicating the cipher systems that the terminal 60 adapts itself to. In this case, the wireless LAN adapter 62 mounted on the terminal 60 adapts itself to the WEP 64 and WEP 128, and the terminal 60 sends the data indicating these two cipher systems.

### Subroutine 4:

The access point 20 detects the cipher systems that the terminal 60 can adapt itself to on the basis of the received data, and narrows its own adaptable cipher systems from the detected cipher systems. In concrete, the cipher systems of the terminal 60 are narrowed down to the WEP 64 and WEP 128. And, the access point 20 sends 'ESSID1' and 'DATA1' associated with the cipher system WEP 64 and 'ESSID2' and 'DATA2' associated with the cipher system WEP 128 to the terminal 60.

Thus, as the result of the packet exchange processing, the terminal 60 receives 'ESSID1' and 'DATA1' associated with the cipher system WEP 64 and 'ESSID2' and 'DATA2' associated with the cipher system WEP 128 only, which is different from the case with the terminal 50, and stores them in a storage area.

The access point 20 detects the cipher systems that the terminal 60 adapts itself to being the WEP 64 and WEP 128 only, selects the WEP 128 of the highest security level out of the two at step S452, and compares the selected WEP 128 with the one of the currently adopted highest security level at step S454. Since the cipher system of the currently highest security level is the TKIP, the WEP 128 is judged to be lower in the security level than the currently highest security level at step S454, and the WEP 128 being the highest level for this time is adopted at step S458.

At step S422, the WEP 128 is adopted as the cipher system, the station ID and cipher key are switched into 'ESSID2' and 'DATA2', respectively. And, the mode is switched into the wireless communication mode at step S424.

In the same manner as the case with the terminal 50, the terminal 60 acquires the station ID from the beacon of the receivable access point, adopts the coincident cipher system and cipher key based on the received security information (step S328, S330), and connects itself to the access point 20 at step S332.

On the other hand, the terminal 50 judges whether the connection with the access point 20 is maintained, at each constant interval at step S360 and step 362. However, the station ID is switched into 'ESSID2' accompanied with the registering of the terminal 60, and the connection state having 'ESSID3' as the station ID is not maintained accordingly. As the result, the terminal 50 detects that the station ID of the access point 20 is switched into 'ESSID2' from the beacon of the receivable access point at step S364. Thus, the WEP 128 is adopted as the cipher system by the station ID, the cipher key 'DATA2' is detected, and the information on these values are set. Thereafter, the terminal 50 connects itself to the access point 20 by using the set information at step S332.

Although the access point 20 did not notify the terminal 50 and the terminal 60 of the determined cipher system by a special procedure, the terminal 50 and the terminal 60 are able to specify the cipher systems and the cipher keys only from the station ID. This is very effective in the situation that the terminals are increasingly added. According to the conventional technique, if there is such a variation on the set information in the access point, it has been understood as a matter of course to notify the terminals of the variation. According to the technique of this invention however, only switching the station ID will prompt all the terminals to search the connectable access points by themselves on the basis of the communication standard IEEE802.11. As the result, the setting can be switched into the cipher system and cipher key effective at the moment only from the station ID. Therefore, it becomes unnecessary to notify all the terminals, even when the cipher systems are switched accompanied with addition of terminals, which is advantageous to the security.

To perform the above processing will maintain the security level based on the security policy determined beforehand.

Next, the setting of the security level will be described with a case that the number of terminals participating in the wireless LAN decreases.

### 2-2 case of decreasing the terminal number

The above description handles a case in which the number of the terminals participating in the wireless LAN increases, and the cipher system and cipher key used between the access point 20 and each of the terminals can be switched. Now, in the wireless LAN built up with the access point 20 playing a central role, the number of the terminals participating in the network varies flexibly owing to the conditions of the terminal owners. Therefore, in case the number of the terminals decreases, there occurs a case that the security level of the cipher system can be switched into that of a higher level.

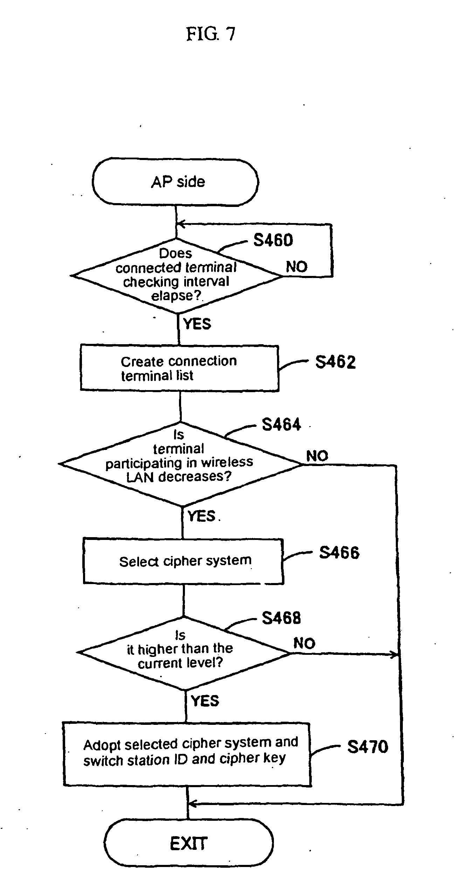

Fig. 7 illustrates a flowchart corresponding to the cipher system selection program that the access point 20 performs when the number of the terminals participating in the wireless LAN decreases.

The following processing is continuously performed by the access point 20 in the wireless communication mode.

In the wireless communication mode, the access point 20 checks whether a predetermined connected terminal checking interval elapses or not at step S460. If it is judged elapsed, the access point 20 creates a connection terminal list relating to the terminals connecting to the access point 20 itself (step S462). That is, the access point 20 repeats to create the connection terminal list at each predetermined interval. And, the access point 20 stores the connection terminal list in the RAM 13 or the like temporarily for a period at least longer than the connected terminal checking interval.

Here, the connection terminal list is created by using the MAC addresses. Since the access point 20 has registered the MAC addresses of the terminals in the one-touch register mode, the access point 20 creates the connection terminal list by selecting the MAC addresses of the terminals that main the connections to the access point 20 itself.

After creating the updated connection terminal list, the access point 20 compares this updated connection terminal list with the previously created one, and judges whether the number of the terminals participating in the wireless LAN decreases or not (step S464). If the number does not decrease, the access point 20 will not perform the review operation of the cipher system, which will be explained hereunder. The reason is as follows.
It is conceivable that, in case of the number of the terminals not varying or increasing, the cipher system is appropriately set on the basis of a predetermined security policy, when a certain terminal is added and registered in the last place in the one-touch register mode.

If it judges that the number decreases, the access point 20 will select the cipher system of the highest security level among the cipher systems that the access point 20 can adopt and the terminals specified based on the updated connection terminal list can commonly adapt themselves to (step S466).

At step S468, the access point 20 compares the security level of the currently adopted cipher system with the security level of the cipher system selected at step S466.

Now, a case will be described as an example, in which the terminal 60 withdraws from the wireless LAN in a state that the terminals 50 and 60 have been participating in the wireless LAN through the access point 20, and the number of the terminals is detected to decrease by the withdrawal of the terminal 60 at step S464. The wireless LAN adapter 52 of the terminal 50 adapts itself to the WEP 64, WEP 128, and TKIP, and the wireless LAN adapter 62 of the terminal 60 adapts itself to the WEP 64 and WEP 128. These cipher systems that the terminals 50 and 60 each adapt themselves to have already been acquired in the packet exchange processing of the security information on the side of the access point 20. Since the terminal 60 has withdrawn from the wireless LAN, the cipher system that the access point 20 selects at step S466 will be the TKIP.

On the other hand, when the policy 1 is selected as the security polity on registering the terminals 50 and 60 through the one-touch register mode, the WEP 128 is adopted in order to enable the terminal 60 having the highest security level lower than that of the terminal 50 to participate in the network.

At step S470, the access point 20 adopts the selected cipher system, when the security level of the selected cipher system exceeds that of the current cipher system. In the above example, the security level of the selected cipher system exceeds that of the current cipher system, and the access point 20 adopts the selected cipher system TKIP accordingly. Then, the access point 20 switches the station ID into 'ESSID3', and the cipher key into 'DATA3'.

On the other hand, when the security level of the selected cipher system is not higher than that of the current cipher system, the access point 20 maintains the current security level, and will not switch the cipher system.

According to the above construction, in the wireless LAN after the terminal 60 of the terminals 50 and 60 has withdrawn from the wireless LAN, there occurs a case that the security level of the adopted cipher system is automatically heightened.

The cipher system has room for such review not only in a case where the number of the terminals participating in the wireless LAN decreases, but also in a case where the terminals participating therein are replaced.

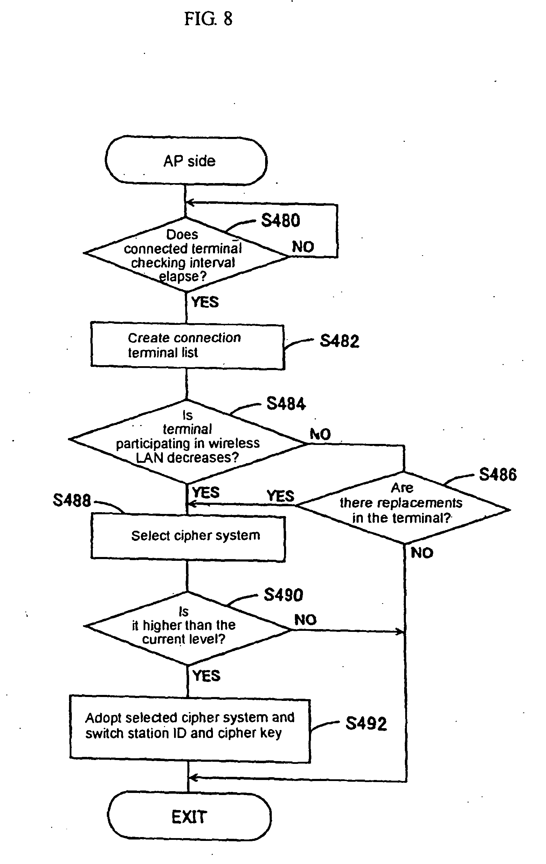

Fig. 8 illustrates a flowchart corresponding to the cipher system selection program that the access point 20 performs when the terminals participating in the wireless LAN are replaced in part. Here, a case will be described as an example, in which the terminal 70 newly participates in the wireless LAN as a registered terminal and the terminal 60 withdraws from the wireless LAN in one connected terminal checking interval, in a state that the terminals 50 and 60 have been participating in the wireless LAN through the access point 20.

In other words, the terminal 60 withdraws from the wireless LAN, in a state that the MAC address of the wireless LAN adapter 72 is registered to the access point 20 in the one-touch register mode, and the cipher systems that the terminals 50 through 70 can commonly adapt themselves to and the cipher keys used for the cipher systems are set to the terminals 50 through 70. Here, the wireless LAN adapter 72 of the terminal 70 is assumed to adapt itself to the WEP 64, WEP 128, and TKIP. Some differences from Fig. 7 in Fig. 8 will mainly be explained.

As shown in Fig. 8, if it is NO at the branch of step S484, the access point 20 checks 'are the terminals participating in the wireless LAN replaced?' (S486). Concretely, the access point 20 compares the updated connection terminal list created at step S482 with the previously created connection terminal list, and judges whether the terminals participating in the wireless LAN are replaced or not on the basis of the MAC addresses of the terminals on the list. In this embodiment, the previously created connection terminal list shows the terminals 50 and 60, and the updated connection terminal list shows the terminals 50 and 70; and the processing advances to step S488 and thereafter, and the cipher system will be reviewed accordingly.

If the judgment is NO at step 486, that is, if there is not any terminal having withdrawn from the wireless LAN and the number of the terminals simply increases, or if there are not any variations in the terminals participating in the wireless LAN, the access point 20 will not perform the review operation of the cipher system. In this case, it is conceivable that the cipher system is appropriately set on the basis of a predetermined security policy, when a certain terminal is added and registered in the last place in the one-touch register mode.

The processing after step S488 are the same as those of step S466 in Fig. 7. As mentioned above, since the terminal 70 participates in the wireless LAN and the terminal 60 withdraws from the wireless LAN in one connected terminal checking interval, the cipher system that the access point 20 selects at step S488 will be the TKIP. On the other hand, when the policy 1 is selected as the security polity on registering the terminals 50 and 60 through the one-touch register mode, the WEP 128 is adopted as the current cipher system. Therefore, as the result of reviewing the cipher system at step S490, the cipher system TKIP is adopted and the security level is enhanced in the above example. Thus, according to the construction of Fig. 8, there can be a case where the security level of the adopted cipher system is automatically heightened.

Accordingly, in case of selecting the cipher system at steps 466, 488, it is not necessarily indispensable to use the guideline on 'selecting the cipher system of the highest security level among the cipher systems that the access point 20 can adopt and the terminals specified based on the updated connection terminal list can commonly adapt themselves to'. In an example, when the communication speed is excessively sacrificed in an attempt to performing a high-level security setting, it is advisable to set an upper limit to the security levels of the selectable cipher systems at steps 466, 488 in order to avoid an excessive lowering of the communication speed.

On occasion of a terminal withdrawing from the network or being replaced, when the adopted cipher system and the cipher key are switched, the other terminals to maintain the connections with the network can easily follow such switching. That is, as explained in Fig. 5, although the access point 20 switches the cipher system and accordingly the station ID, a terminal to maintain the connection with the network will detect the switched station ID in the connection-monitoring mode. And the terminal will detect that the cipher system TKIP is newly adopted in the above example, and the cipher key is 'DATA3'. Using this information, the terminal is able to maintain the connection with the access point 20 thereafter.

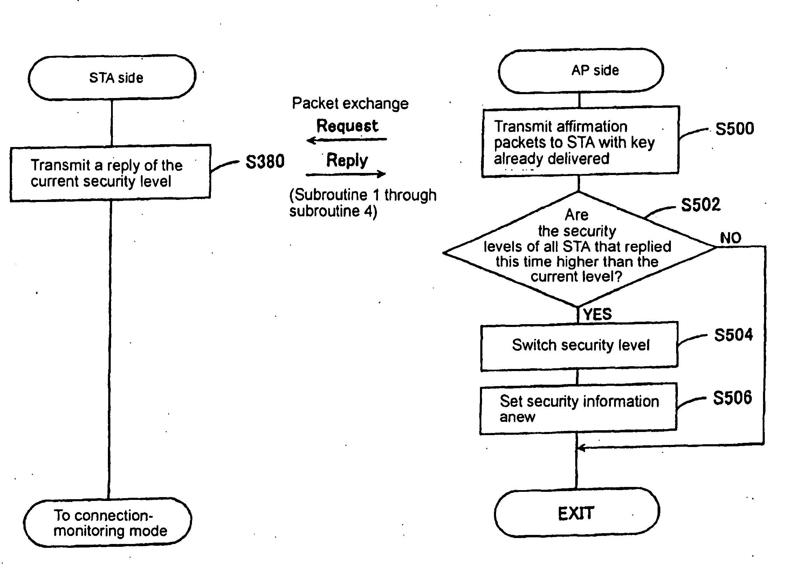

When there is room for enhancing the security level, the processing as shown in Fig. 9 may be performed.

At first, the access point 20 sends an affirmation packet for confirming the adaptable cipher systems to all the terminals to which the cipher keys have already been delivered, at step S500.

In response to this, the terminals each reply an answer packet indicating the adaptable cipher systems at that moment at step S380. In this case, the cipher systems may be replied, or the security levels associated with the cipher systems each may be replied.

The access point 20 contrasts the cipher system of the highest security level common to all the terminals that replied this time with the cipher system that the access point 20 currently adopts at step S502, and judges whether the security levels are lowered needlessly. If there is a margin for heightening the security levels, the access point 20 switches the cipher systems into those having the security levels enhanced at step S504, and switches the set information at step S506. Although the access point 20 does not necessarily notify the terminals of the switching in this case, each of the terminals is able to switch the current cipher system and cipher key into appropriate ones based on the switching of the station ID of the access point 20 in the connection-monitoring mode.

### 3. Modified examples

The invention has been described based on the above one embodiment relating to the invention. However, it is natural that the invention can be implemented by way of various embodiments other than the above embodiment.

As an example, the above embodiment employs the WEP as the technique that enciphers the contents of data exchanged between the terminals and the access point. However, the other cipher techniques may be used instead. For example, the public key cryptosystem (the key for enciphering data and the key for deciphering the enciphered data are different) may be used instead of the WEP. It is also conceivable to use the WPA (Wi-Fi Protected Access) being a high-resilience cryptosystem.

The above embodiment performs the setting by transmitting and receiving the radio waves between the wireless LAN adapter 52 mounted on the terminal 50 and the transmitter 25 and receiver 26 of the access point 20. However, the setting may be made by the other wireless communication techniques not using the radio waves. For example, the infrared rays, laser beams, audio signals, supersonic rays, and extremely low power radio waves and so forth can be used instead. The wireless communication between the terminal 50 and the access point 20 can also be achieved by using the Bluetooth (short-range wireless communication system).

The construction of the above embodiment may be used together with the data transmission by the aforementioned other wireless communication techniques. As an example, a construction using the data transmission by the infrared rays will be described hereunder. The differences from the constructions of the above embodiment are as follows: the access point 20 includes an infrared receiving interface mutually connected by the CPU 11 and the bus, and an infrared receiver connected to the infrared receiving interface; and the terminal 50 includes an infrared transmitting interface mutually connected by the CPU and the bus, and an infrared transmitter connected to the infrared transmitting interface.

The infrared receiver of the access point 20 includes a photodiode having a given sensitivity in the infrared range. The infrared transmitter of the terminal 50 includes an LED that emits light of which wavelength is in the infrared range. The infrared transmitting interface of the terminal 50 converts an instruction signal from the CPU into a carrier wave with this instruction signal superposed. The infrared transmitter transmits the converted carrier wave. The infrared receiver of the access point 20 receives the converted carrier wave thus transmitted from the terminal 50, in case the terminal 50 exists in a security reception area (the area in which the infrared receiver can receive the carrier wave). The infrared receiving interface, accepting the carrier wave thus received, converts the carrier wave into a command signal having the carrier wave binary-coded, and sends the command signal after converted to the CPU 11.

The infrared transmitting interface and the infrared transmitter maybe incorporated into the terminal 50 in advance, and the infrared transmitter may be connected to the audio output terminal of the terminal 50.

The construction using the data transmission by the infrared rays together in the data communication using the radio waves has been described as an example. However, the data transmission by the wireless communication not using the infrared rays, but using the laser beams, audio signals, supersonic rays, and extremely low power radio waves and so forth may be used together in the data communication using the radio waves. In case of using the data transmission by visible light together, the liquid crystal device of a personal computer or a mobile information terminal or the like may be used as the light-emitting device. This makes it possible to transmit a light signal having MAC address information superposed to the access point 20 from the liquid crystal device of the terminal.

The above embodiment delimits the wireless communication area during the setting. However, the delimitation of the wireless communication area can be applied not only to the aforementioned setting, but also to the setting of other information exchanged between the access point 20 and the terminal 50. For example, in a free spot that transmits pay contents to a specific person only, there is a case in which the information (the name of the terminal owner, ID, password, etc.) for authenticating that the owner of the terminal having made an access is the specific person is registered to the access point 20 and the terminal 50 in advance. The registering of such authentication information on the specific person may be performed by the wireless communication, while delimiting the wireless communication area including the access point 20 and the terminal 50. This will save manual setting of information for authenticating a person, such as ID and password and so forth.

### 4. Conclusion

As the embodiment has thus been described, the access point 20 detects the terminals connected to the wireless LAN through the access point 20 repeatedly at each predetermined interval, and reviews the cipher system to be adopted when the number of the terminals participating in the wireless LAN decreases or when there are replaced terminals. Through such reviews, the access point 20 adopts the cipher system according to the guideline that selects the cipher system of the highest security level from among the cipher systems that the devices building up the network can commonly adopt. Thereby, the construction of this embodiment prevents a needlessly low-level security setting from being maintained unreasonably, after a terminal withdrew from the network or after some terminals were replaced. Further, by performing the security setting based on the above security policy when the number of the terminals increases and the review of the security setting based on the above guideline when the number of the terminals decreases, or some terminals are replaced, the embodiment can provide optimum security environments invariably at any time, regardless of constructional variations in the terminals building up the network.

## Claims

1. A cipher key setting system adapted to set a cipher system and a cipher key used for enciphering prior to communication of wireless communication data exchanged by wireless between a wireless LAN access point (20) and a terminal (50) with a wireless LAN interfacing device (52), wherein:
the terminal (50) comprises:
a cipher system transmitting means on the terminal (50) side adapted to transmit to the access point (20) by wireless cipher systems that the terminal (50) can adapt itself to, and
a cipher system selecting means on the terminal (50) side adapted to detect a cipher system adopted by the access point (20) and to select the detected cipher system, **characterized in that**
the access point (20) comprises:
a connected terminal (50) detecting means adapted to specify terminals (50, 60, 70) participating in a wireless LAN (AR1) and to detect whether there are any variations in the terminals (50, 60, 70) participating therein, and
a cipher system selecting means on the access point (20) side adapted to select, when the connected terminal detecting means detects that there have been variations in the terminals (50, 60, 70) participating in the wireless LAN (AR1), a specified cipher system according to a predetermined criterion among the cipher systems that the access point (20) can adapt itself to and the terminals(50, 60, 70) participating in the wireless LAN (AR1) can commonly adapt themselves to.

2. A cipher key setting system according to Claim 1, wherein, when the connected terminal detecting means detects that there have been variations in the terminals (50, 60, 70) participating in the wireless LAN (AR1), and when the terminals(50, 60, 70) participating in the wireless LAN (AR1) can commonly adapt themselves to a cipher system of a higher security level compared to the cipher system being adopted thus far, the cipher system selecting means on the access point (20) side is adapted to select the cipher system of the higher security level.

3. A cipher key setting system according to Claim 1 or Claim 2, wherein the connected terminal detecting means is adapted to specify the terminals(50, 60, 70) participating in the wireless LAN (AR1) repeatedly at each predetermined time on the basis of identification information inherent in the terminals (50, 60, 70) each, to compare the specified identification information inherent in the terminals (50, 60, 70) each with the identification information inherent in the terminals (50, 60, 70) each that were acquired by a previous specifying operation of the terminals (50, 60, 70), and thereby to detect that the number of the terminals (50, 60, 70) participating in the wireless LAN (AR1) decreases.

4. A cipher key setting system according to any of Claim 1 through Claim 3, wherein the connected terminal detecting means is adapted to specify the terminals(50, 60, 70) participating in the wireless LAN (AR1) repeatedly at each predetermined time on the basis of identification information inherent in the terminals (50, 60, 70) each, to compare the specified identification information inherent in the terminals (50, 60, 70) each with the identification information inherent in the terminals (50, 60, 70) each that were acquired by a previous specifying operation of the terminals (50, 60, 70), and thereby to detect that there are replacements in the terminals(50, 60, 70) participating in the wireless LAN (AR1).

5. A cipher key setting system according to any of Claim 1 through Claim 4, wherein:
the access point (20) comprises a cipher key transmitting means on the access point (20) side adapted to transmit to a terminal (50) by wireless cipher systems narrowed by the cipher systems transmitted by the cipher system transmitting means on the terminal (50) side and cipher keys used in each of the narrowed cipher systems, of the cipher systems that the access point (20) can adapt itself to; and
the terminal (50) comprises a cipher key storing means on the terminal (50) side adapted to store each of the cipher keys corresponding to each of the cipher systems transmitted from the access point (20) in a predetermined storage area.

6. A cipher key setting system according to Claim 5, wherein the cipher key transmitting means on the access point (20) side is adapted to perform processing that transmits the narrowed cipher systems and the cipher keys used in each of the narrowed cipher systems to the terminal (50), only once when the cipher systems are transmitted by the cipher system transmitting means of the terminal (50) concerned on the terminal (50) side.

7. A cipher key setting system according to Claim 5 or Claim 6, wherein, when switching an adopted cipher system accompanied with the variations in the terminals (50, 60, 70) participating in the wireless LAN (AR1), the cipher system selecting means on the access point (20) side is adapted to change a station ID in correspondence with the switching of the adopted cipher system.

8. A cipher key setting system according to any of Claim 5 through Claim 7, wherein:
the cipher key transmitting means on the access point (20) side is adapted to specify different station IDs to each of the cipher systems that the access point (20) can adapt itself to, and to transmit to the terminals (50, 60, 70) by wireless the specified station IDs together with the cipher keys in correspondence with each of the narrowed cipher systems, and
the cipher system selecting means on the terminal (50) side is adapted to acquire the station IDs from connectable access point (20)s, and when the acquired station IDs have a station ID coincident with the station IDs stored in advance by the cipher key storing means on the terminal (50) side, is adapted to adopt the cipher system and the cipher key corresponding to the station ID.

9. A cipher key setting system according to Claim 8, wherein, when it becomes impossible to maintain the wireless communication with the access point (20) based on the specified station ID, the cipher system selecting means on the terminal (50) side is adapted to newly acquire the station IDs from the connectable access point (20)s, and when the newly acquired station IDs have a station ID coincident with the station IDs stored in advance, to adopt the cipher system and the cipher key corresponding to the station ID.

10. A wireless LAN access point (20) arranged to adapt itself to a plurality of cipher systems in the wireless LAN communication, and adapted to set a cipher system and a cipher key used in enciphering communication data prior to performing wireless communications with a terminal (50) provided with a wireless LAN interfacing device (52), **characterized by**
a connected terminal detecting means adapted to specify terminals (50, 60, 70) participating in a wireless LAN (AR1) and to detect whether there are any variations in the terminals (50, 60, 70) participating therein, and
a cipher system selecting means on the access point (20) side adapted to select, when the connected terminal detecting means detects that there have been variations in the terminals (50, 60, 70) participating in the wireless LAN (AR1), a specified cipher system according to a predetermined criterion on the basis of data relating to the cipher systems transmitted in advance by wireless from a plurality of terminals (50, 60, 70), among the cipher systems that the access point (20) can adapt itself to and the terminals (50, 60, 70) participating in the wireless LAN (AR1) can commonly adapt themselves to.

11. A cipher key setting method that sets a cipher system and a cipher key used for enciphering prior to communication of wireless communication data exchanged by wireless between a wireless LAN access point (20) and a terminal (50) with a wireless LAN interfacing device (52), wherein:
the terminal (50) transmits to the access point (20) by wireless cipher systems that the terminal (50) can adapt itself to,**characterized in that**
the access point (20) specifies terminals (50, 60, 70) participating in a wireless LAN (AR1) through the access point (20) and detects whether there are any variations in the terminals (50, 60, 70) participating therein, and when detecting that there have been variations in the terminals (50, 60, 70) participating in the wireless LAN (AR1), adopts to select a specified cipher system according to a predetermined criterion among the cipher systems that the access point (20) can adapt itself to and the terminals (50, 60, 70) participating in the wireless LAN (AR1) can commonly adapt themselves to, and
the terminal (50) detects the cipher system adopted by the access point (20) and selects the detected cipher system.

## Patentansprüche

1. System zur Verarbeitung von kryptographischen Schlüsseln, das zum Verarbeiten eines kryptographischen Systems und eines kryptographischen Schlüssels imstande ist, das/der zum Verschlüsseln drahtloser Kommunikationsdaten vor der Kommunikation verwendet wird, die drahtlos zwischen einem drahtlosen LAN-Access-Point (20) und einem Terminal (50) mit einer drahtlosen LAN-Schnittstellenvorrichtung (52) ausgetauscht werden, wobei:
das Terminal (50) umfasst:
ein Übertragungsmittel für ein kryptographisches System an der Seite des Terminals (50), das dazu ausgebildet ist, zu dem Access-Point (20) durch drahtlose kryptographische Systeme zu übertragen, an die sich das Terminal (50) selbst anpassen kann, und
ein Wählmittel für ein kryptographisches System an der Seite des Terminals (50), das dazu ausgebildet ist, ein kryptographisches Systems zu erfassen, das von dem Access-Point (20) angenommen wird, und das erfasste kryptographisch System zu wählen, **dadurch gekennzeichnet, dass**
der Access-Point (20) umfasst:
ein Detektionsmittel für ein angeschlossenes Terminal (50), das dazu ausgebildet ist, Terminals (50, 60, 70) zu spezifizieren, die an einem drahtlosen LAN (AR1) teilnehmen, und zu erfassen, ob es Unterschiede in den Terminals (50, 60, 70) gibt, die an diesem teilnehmen, und
ein Wählmittel für ein kryptographisches System an der Seite des Access-Points (20), das dazu ausgebildet ist, wenn das Detektionsmittel für ein angeschlossenes Terminal erfasst, dass es Unterschiede in den Terminals (50, 60, 70) gibt, die an dem drahtlosen LAN (AR1) teilnehmen, ein spezifiziertes kryptographisches System entsprechend einem vorbestimmten Kriterium aus den kryptographischen Systemen zu wählen, an die sich der Access-Point (20) selbst anpassen kann und an das sich die Terminals (50, 60, 70), die an dem drahtlosen LAN (AR1) teilnehmen, allgemein selbst anpassen können.

2. System zur Verarbeitung von kryptographischen Schlüsseln nach Anspruch 1, wobei, wenn das Detektionsmittel für ein angeschlossenes Terminal erfasst, dass es Unterschiede in den Terminals (50, 60, 70) gibt, die an dem drahtlosen LAN (AR1) teilnehmen, und wenn die Terminals (50, 60, 70), die an dem drahtlosen LAN (AR1) teilnehmen, sich allgemein selbst an ein kryptographisches System mit höherer Sicherheitsstufe im Vergleich zu dem bisher angenommenen kryptographischen System anpassen können, das Wählmittel für ein kryptographisches System an der Seite des Access-Points (20), dazu ausgebildet ist, das kryptographische System mit höherer Sicherheitsstufe zu wählen.

3. System zur Verarbeitung von kryptographischen Schlüsseln nach Anspruch 1 oder Anspruch 2, wobei das Detektionsmittel für ein angeschlossenes Terminal dazu ausgebildet ist, die Terminals (50, 60, 70), die an dem drahtlosen LAN (AR1) teilnehmen, wiederholt zu jedem vorbestimmten Zeitpunkt auf der Basis von Identifikationsinformationen, die den Terminals (50, 60, 70) eigen sind, zu spezifizieren, um die spezifizierten Identifikationsinformationen, die den Terminals (50, 60, 70) eigen sind, jeweils mit den Identifikationsinformationen, die den Terminals (50, 60, 70) eigen sind, die durch einen vorangehenden Spezifizierungsvorgang der Terminals (50, 60, 70) erfasst wurden, zu vergleichen, und **dadurch** zu erfassen, dass die Anzahl der Terminals (50, 60, 70), die an dem drahtlosen LAN (AR1) teilnehmen, abnimmt.

4. System zur Verarbeitung von kryptographischen Schlüsseln nach einem der Ansprüche 1 bis 3, wobei das Detektionsmittel für ein angeschlossenes Terminal dazu ausgebildet ist, die Terminals (50, 60, 70), die an dem drahtlosen LAN (AR1) teilnehmen, wiederholt zu jedem vorbestimmten Zeitpunkt auf der Basis von Identifikationsinformationen, die den Terminals (50, 60, 70) eigen sind, zu spezifizieren, um die spezifizierten Identifikationsinformationen, die den Terminals (50, 60, 70) eigen sind, jeweils mit den Identifikationsinformationen, die den Terminals (50, 60, 70) eigen sind, die durch einen vorangehenden Spezifizierungsvorgang der Terminals (50, 60, 70) erfasst wurden, zu vergleichen, und **dadurch** zu erfassen, dass Terminals (50, 60, 70), die an dem drahtlosen LAN (AR1) teilnehmen, ersetzt wurden.

5. System zur Verarbeitung von kryptographischen Schlüsseln nach einem der Ansprüche 1 bis 4, wobei:
der Access-Point (20) ein Übertragungsmittel für einen kryptographischen Schlüssel an der Seite des Access-Points (20) umfasst, das dazu ausgebildet ist, zu einem Terminal (50) durch drahtlose kryptographische Systeme zu übertragen, die durch die kryptographischen Systeme eingeengt sind, die von dem Übertragungsmittel für ein kryptographisches System an der Seite des Terminals (50) übertragen werden, sowie kryptographische Schlüssel, die in jedem der eingeengten kryptographischen Systeme verwendet werden, von den kryptographischen Systemen, an die sich der Access-Point (20) selbst anpassen kann; und
das Terminal (50) ein Speichermittel für einen kryptographischen Schlüssel an der Seite des Terminals (50) umfasst, das dazu ausgebildet ist, jeden der kryptographischen Schlüssel entsprechend jedem der kryptographischen Systeme, die vom Access-Point (20) übertragen werden, in einem vorbestimmten Speicherbereich zu speichern.

6. System zur Verarbeitung von kryptographischen Schlüsseln nach Anspruch 5, wobei das Übertragungsmittel für einen kryptographischen Schlüssel an der Seite des Access-Points (20) dazu ausgebildet ist, eine Verarbeitung auszuführen, die die eingeengten kryptographischen Systeme und die kryptographischen Schlüssel, die in jedem der eingeengten kryptographischen Systeme verwendet werden, zu dem Terminal (50) nur einmal zu übertragen, wenn die kryptographischen Systeme von dem betroffenen Übertragungsmittel für ein kryptographisches System an der Seite des Terminals (50) an der Seite des Terminals (50) übertragen werden.

7. System zur Verarbeitung von kryptographischen Schlüsseln nach Anspruch 5 oder Anspruch 6, wobei, wenn ein angenommenes kryptographisches System in Verbindung mit den Änderungen in den Terminals (50, 60, 70) die an dem drahtlosen LAN (AR1) teilnehmen, umgeschaltet wird, das Wählmittel für ein kryptographisches System an der Seite des Access-Points (20) dazu ausgebildet ist, eine Stations-ID in Übereinstimmung mit dem Umschalten der angenommenen kryptographischen Systeme zu ändern.

8. System zur Verarbeitung von kryptographischen Schlüsseln nach einem der Ansprüche 5 bis 7, wobei:
das Übertragungsmittel für das kryptographische System an der Seite des Access-Points (20) dazu ausgebildet ist, verschiedene Stations-IDs bei jedem der kryptographischen Systeme zu spezifizieren, an die sich der Access-Point (20) selbst anpassen kann, und zu den Terminals (50, 60, 70) drahtlos die spezifizierten Stations-IDs gemeinsam mit den kryptographischen Schlüsseln in Übereinstimmung mit jedem der eingeengten kryptographischen Systeme zu übertragen, und
das Wählmittel für ein kryptographisches System an der Seite des Terminals (50) dazu ausgebildet ist, die Stations-IDs von anschließbaren Access-Points (20) zu erfassen, und wenn die erfassten Stations-IDs eine Stations-ID aufweisen, die mit den Stations-IDs übereinstimmt, die im Voraus von dem Speichermittel für einen kryptographischen Schlüssel an der Seite des Terminals (50) gespeichert wurden, dazu ausgebildet ist, das kryptographische System und den kryptographischen Schlüssel entsprechend der Stations-ID anzunehmen.

9. System zur Verarbeitung von kryptographischen Schlüsseln nach Anspruch 8, wobei, wenn es unmöglich wird, die drahtlose Kommunikation mit dem Access-Point (20) auf der Basis der spezifizierten Stations-ID aufrechtzuerhalten, das Wählmittel für ein kryptographisches System an der Seite des Terminals (50) dazu ausgebildet ist, erneut die Stations-IDs von den anschließbaren Access-Points (20) zu erfassen, und wenn die erneut erfassten Stations-IDs eine Stations-ID aufweisen, die mit den Stations-IDs übereinstimmt, die im Voraus gespeichert wurden, das kryptographische System und den kryptographischen Schlüssel entsprechend der Stations-ID anzunehmen.

10. Access-Point (20) in einem drahtlosen LAN, der dazu ausgebildet ist, sich selbst an eine Mehrzahl von kryptographischen Systemen in der drahtlosen LAN-Kommunikation anzupassen, und dazu ausgebildet ist, ein kryptographisches System und einen kryptographischesn Schlüssel zu verarbeiten, das/der in der Verschlüsselung von Kommunikationsdaten vor der Ausführung drahtloser Kommunikationen mit einem Terminal (50) verwendet wird, das mit einer drahtlosen LAN-Schnittstellenvorrichtung (52) bereitgestellt ist, **gekennzeichnet durch**
ein Detektionsmittel für ein angeschlossenes Terminal (50), das dazu ausgebildet ist, Terminals (50, 60, 70) zu spezifizieren, die an einem drahtlosen LAN (AR1) teilnehmen, und zu erfassen, ob es Unterschiede in den Terminals (50, 60, 70) gibt, die an diesem teilnehmen, und
ein Wählmittel für ein kryptographisches System an der Seite des Access-Points (20), das dazu ausgebildet ist, wenn das Detektionsmittel für ein angeschlossenes Terminal erfasst, dass es Unterschiede in den Terminals (50, 60, 70) gibt, die an dem drahtlosen LAN (AR1) teilnehmen, ein spezifiziertes kryptographisches System entsprechend einem vorbestimmten Kriterium auf der Basis von Daten, die sich auf die kryptographischen Systeme beziehen, die im Voraus drahtlos von einer Mehrzahl von Terminals (50, 60, 70) übertragen wurden, aus den kryptographischen Systemen zu wählen, an die sich der Access-Point (20) selbst anpassen kann und an das sich die Terminals (50, 60, 70), die an dem drahtlosen LAN (AR1) teilnehmen, allgemein selbst anpassen können.

11. Verfahren zur Verarbeitung von kryptographischen Schlüsseln, das ein kryptographisches System und einen kryptographischen Schlüssel verarbeitet, das/der zum Verschlüsseln drahtloser Kommunikationsdaten vor der Kommunikation verwendet wird, die drahtlos zwischen einem drahtlosen LAN-Access-Point (20) und einem Terminal (50) mit einer drahtlosen LAN-Schnittstellenvorrichtung (52) ausgetauscht werden, wobei:
das Terminal (50) zu dem Access-Point (20) durch drahtlose kryptographische Systeme überträgt, an die sich das Terminal (50) selbst anpassen kann, **dadurch gekennzeichnet, dass**
der Access-Point (20) Terminals (50, 60, 70) spezifiziert, die an einem drahtlosen LAN (AR1) durch den Access-Point (20) teilnehmen, und erfasst, ob es Unterschiede in den Terminals (50, 60, 70) gibt, die an diesem teilnehmen, und wenn erfasst wird, dass es Unterschiede in den Terminals (50, 60, 70) gibt, die an dem drahtlosen LAN (AR1) teilnehmen; dazu ausgebildet ist, ein spezifiziertes kryptographisches System entsprechend einem vorbestimmten Kriterium aus den kryptographischen Systemen zu wählen, an die sich der Access-Point (20) selbst anpassen kann und an das sich die Terminals (50, 60, 70), die an dem drahtlosen LAN (AR1) teilnehmen, allgemein selbst anpassen können und
das Terminal (50) das kryptographische System erfasst, das von dem Access-Point (20) angenommen wurde, und das erfasste kryptographische System wählt.

## Revendications

1. Système d'établissement du chiffrement adapté pour fixer un système de chiffrement et une clé de chiffre utilisés pour le chiffrement avant la communication de données de communication sans fil échangées sans fil entre un point d'accès (20) de réseau local sans fil et un terminal (50) avec un dispositif d'interface de réseau local sans fil (52), avec lequel :
le terminal (50) comprend :
un moyen de transmission du système de chiffrement du côté du terminal (50), adapté pour transmettre au point d'accès (20) de manière sans fil des systèmes de chiffrement auxquels le terminal (50) peut s'adapter, et
un moyen de sélection de système de chiffrement du côté du terminal (50), adapté pour détecter un système de chiffrement adopté par le point d'accès (20) et pour sélectionner le système de chiffrement détecté,
**caractérisé en ce que**
le point d'accès comprenne :
un moyen de détection des terminaux (50) connectés, adapté pour spécifier les terminaux (50, 60, 70) participant à un réseau local sans fil (AR1) et pour détecter s'il y a un quelconque changement concernant les terminaux (50, 60, 70) qui y participent, et
un moyen de sélection du système de chiffrement du côté du point d'accès (20), adapté pour sélectionner, lorsque le moyen de détection des terminaux connectés détecte qu'il y a eu des changements concernant les terminaux (50, 60, 70) participant au réseau local sans fil (AR1), un système de chiffrement spécifié en fonction d'un critère prédéfini parmi les systèmes de chiffrement auxquels le point d'accès (20) peut s'adapter et auxquels les terminaux (50, 60, 70) participant au réseau local sans fil (AR1) peuvent s'adapter en commun.

2. Système d'établissement du chiffrement selon la revendication 1 avec lequel, lorsque le moyen de détection des terminaux connectés détecte qu'il y a eu des changements concernant les terminaux (50, 60, 70) participant au réseau local sans fil (AR1), et lorsque les terminaux (50, 60, 70) participant au réseau local sans fil (AR1) peuvent s'adapter en commun à un système de chiffrement d'un niveau de sécurité plus élevé en comparaison avec le système de chiffrement adopté jusque là, le moyen de sélection du système de chiffrement du côté du point d'accès (20) est adapté pour sélectionner le système de chiffrement du niveau de sécurité plus élevé.

3. Système d'établissement du chiffrement selon la revendication 1 ou la revendication 2, avec lequel le moyen de détection des terminaux connectés est adapté pour spécifier les terminaux (50, 60, 70) participant au réseau local sans fil (AR1) de manière répétée à chaque moment prédéfini sur la base de l'information d'identification inhérente à chacun des terminaux (50, 60, 70), afin de comparer l'information d'identification spécifiée inhérente à chacun des terminaux (50, 60, 70) avec l'information d'identification inhérente à chacun des terminaux (50, 60, 70) ayant été acquise grâce à une opération de spécification précédente des terminaux (50, 60, 70), et pour détecter de la sorte que le nombre de terminaux (50, 60, 70) participant au réseau local sans fil (AR1) diminue.

4. Système d'établissement du chiffrement selon l'une quelconque des revendications 1 à 3, où le moyen de détection des terminaux connectés est adapté pour spécifier les terminaux (50, 60, 70) participant au réseau local sans fil (AR1) de manière répétée à chaque moment prédéfini sur la base de l'information d'identification inhérente à chacun des terminaux (50, 60, 70), afin de comparer l'information d'identification spécifiée inhérente à chacun des terminaux (50, 60, 70) avec l'information d'identification inhérente à chacun des terminaux (50, 60, 70) qui a été acquise grâce à une opération de spécification des terminaux (50, 60, 70) précédente, et afin de détecter de la sorte qu'il y a des remplacements des terminaux (50, 60, 70) participant au réseau local sans fil (AR1).

5. Système d'établissement du chiffrement selon l'une quelconque des revendications 1 à 4, avec lequel :
le point d'accès (20) comprend un moyen de transmission de la clé de chiffre du côté du point d'accès (20), adapté pour transmettre à un terminal (50) de manière sans fil, les systèmes de chiffrement restreints grâce aux systèmes de chiffrement transmis par le moyen de transmission du système de chiffrement du côté du terminal (50) et les clés de chiffre utilisées dans chacun des systèmes de chiffrement restreints, des systèmes de chiffrement auxquels le point d'accès (20) peut s'adapter ; et
le terminal (50) comprenant un moyen de stockage de la clé de chiffre du côté du terminal (50), adapté pour stocker chacune des clés de chiffre correspondant à chacun des systèmes de chiffrement transmis par le point d'accès (20) dans une zone de stockage prédéterminée.

6. Système d'établissement du chiffrement selon la revendication 5, avec lequel le moyen de transmission de la clé de chiffre du côté du point d'accès (20) est adapté pour réaliser un traitement consistant à transmettre les systèmes de chiffrement restreints et les clés de chiffre utilisés dans chacun des systèmes de chiffrement restreints à l'attention du terminal (50), seulement une fois lorsque les systèmes de chiffrement sont transmis grâce au moyen de transmission du système de chiffrement du terminal (50) concerné du côté du terminal (50).

7. Système d'établissement du chiffrement selon la revendication 5 ou la revendication 6 avec lequel, lors de la commutation d'un système de chiffrement adopté s'accompagnant de changements au niveau des terminaux (50, 60, 70) participant au réseau local sans fil (AR1), le moyen de sélection du système de chiffrement du côté du point d'accès (20) est adapté pour modifier un identifiant de poste en correspondance avec la commutation du système de chiffrement adopté.

8. Système d'établissement du chiffrement selon l'une quelconque des revendications 5 à 7 avec lequel :
le moyen de transmission de la clé de chiffre du côté du point d'accès (20) est adapté pour spécifier différents identifiants de postes pour chacun des systèmes de chiffrement auxquels le point d'accès (20) peut s'adapter, et pour transmettre aux terminaux (50, 60, 70) de manière sans fil les identifiants de postes spécifiés ensemble avec les clés de chiffre en correspondance avec chacun des systèmes de chiffrement restreints, et
le moyen de sélection du système de chiffrement du côté du terminal (50) étant adapté pour acquérir les identifiants des postes à partir des points d'accès (20) de connexion, et lorsque les identifiants des postes acquis possèdent un identifiant de poste coïncident avec les identifiants de postes enregistrés à l'avance par le moyen de stockage de la clé de chiffre du côté du terminal (50), étant adapté pour adopter le système de chiffrement et la clé de chiffre
correspondants à l'identifiant de poste.

9. Système d'établissement du chiffrement selon la revendication 8 avec lequel, lorsqu'il devient impossible de conserver la communication sans fil avec le point d'accès (20) sur la base de l'identifiant de poste spécifié, le moyen de sélection du système de chiffrement du côté du terminal (50) est adapté pour nouvellement acquérir les identifiants de postes à partir du point d'accès (20) de connexion, et lorsque les identifiants de postes nouvellement acquis possèdent un identifiant de poste coïncident avec les identifiants de postes enregistrés à l'avance, est adapté pour adopter le système de chiffrement et la clé de chiffre correspondants à l'identifiant du poste.

10. Point d'accès (20) de réseau local sans fil étudié pour s'adapter à une pluralité de systèmes de chiffrement lors de la communication en réseau local sans fil, et adapté pour fixer un système de chiffrement et une clé de chiffre utilisés pour le chiffrement de données de communication avant de réaliser des communications sans fil avec un terminal (50) muni d'un dispositif d'interface de réseau local sans fil (52), **caractérisé par**
un moyen de détection des terminaux connectés, adapté pour spécifier les terminaux (50, 60, 70) participant à un réseau local sans fil (AR1) et pour détecter s'il y a des changements au niveau des terminaux (50, 60, 70) qui y participent, et
un moyen de sélection du système de chiffrement du côté du point d'accès (20) adapté pour sélectionner, lorsque le moyen de détection des terminaux connectés détecte qu'il y a eu des changements concernant les terminaux (50, 60, 70) participant au réseau local sans fil (AR1), un système de chiffrement spécifié en fonction d'un critère prédéfini sur la base de données concernant les systèmes de chiffrements transmises à l'avance de manière sans fil d'une pluralité de terminaux (50, 60, 70) parmi les systèmes de chiffrement auxquels le point d'accès (20) peut s'adapter et auxquels les terminaux (50, 60, 70) participant au réseau local sans fil. (AR1) peuvent s'adapter en commun.

11. Méthode d'établissement du chiffrement qui fixe un système de chiffrement et une clé de chiffre utilisés pour le chiffrement avant la communication de données de communication sans fil échangées de manière sans fil entre un point d'accès (20) sans fil et un terminal (50) avec un dispositif d'interface de réseau local sans fil (52), avec laquelle :
le terminal (50) transmet au point d'accès (20) de manière sans fil les systèmes de chiffrement auxquels le terminal (50) peut s'adapter, **caractérisé en ce que** le point d'accès (20) spécifie les terminaux (50, 60, 70) participant à un réseau local sans fil (AR1) via la point d'accès (20) et détecte s'il y a des quelconques changements concernant les terminaux (50, 60, 70) qui y participent, et lorsque l'on détecte qu'il y a eu des changements concernant les terminaux (50, 60, 70) participant au réseau local sans fil (AR1), est adapté pour sélectionner un système de chiffrement spécifié en fonction d'un critère prédéterminé parmi les systèmes de chiffrement auxquels le point d'accès (20) peut s'adapter et auxquels les terminaux (50, 60, 70) participant au réseau local sans fil (AR1) peuvent s'adapter en commun, et
le terminal (50) détectant le système de chiffrement adopté par le point d'accès (20) et sélectionnant le système de chiffrement détecté.
